# EUROPEAN PATENT APPLICATION

(11) **EP 4 174 684 A1**
(43) Date of publication of application: **03.05.2023**
(21) Application number: 22182554.0
(22) Date of filing: 01.07.2022
(51) Int. Cl.: G06F 16/955, H04L 9/40

(54) **DOMAIN SEARCH PROGRAM, METHOD OF SEARCHING DOMAIN, AND INFORMATION PROCESSING APPARATUS**

(30) Priority: 01.11.2021 JP 2021178730
(71) Applicant: FUJITSU LIMITED, Kawasaki-shi, Kanagawa 211-8588 (JP)
(72) Inventor: TANIGUCHI, Tsuyoshi, Kawasaki-shi, Kanagawa, 211-8588 (JP)
(74) Representative: Hoffmann Eitle

(57) **Abstract**

A domain search program including instructions which, when executed by a computer, cause the computer to perform processing, the processing including: generating a character string in which a character string of a domain of a first hierarchical level in a domain name space is concatenated with a character string of a domain of a second hierarchical level that is a lower hierarchical level relative to the first hierarchical level; and in a case where a domain of the generated character string is included in a domain list in which at least one particular domain is described, outputting information that serves as an indicator of unauthorized use of the particular domain.

## Description

### FIELD

An embodiment discussed herein is related to a domain search program, a method of searching a domain, and an information processing apparatus.

### BACKGROUND

From around the year 2000, various damages have occurred such abuse of a domain parking service (hereinafter, also referred to as unauthorized use) in which mistyping of a universal resource locator (URL) by a user is redirected to an advertisement to gain a profit by using a technique such as typosquatting aimed at a brand domain, authentication information stealing by a phishing scam, and the like. A brand domain is a well-known domain that has commonly penetrated. Examples of the brand domain include, for example, google.com of Google (registered trademark), apple.com of Apple Inc. (registered trademark), fujitsu.com of Fujitsu (registered trademark), youtube.com of YouTube (registered trademark), and so forth.

As detection of typosquatting that abuses a brand domain, Microsoft Corporation (registered trademark) has proposed Strider Typo-Patrol. According to this technique, a typo domain of a brand domain is automatically scanned to scrutinize an HTTP log.

For detecting the abuse of a brand domain, a level squatting detection technique has been proposed. The level squatting abuses subdomains that may be operated freely in any character string without cost or restriction. For example, in the level squatting, a character string that appears a fully qualified domain name (FQDN) of a brand domain is operated as a subdomain of a domain that is completely irrelevant to the brand at all.

In the related-art level squatting detection technique, google.com.example.com is described as an example. Although google.com is a domain of Google, google.com is a subdomain in this example, and example.com is a domain irrelevant to Google.

Similarly, subdomains such as fujitsu.com.example.com and the like may be operated without restriction. Compared to the typosquatting, since a subdomain portion is a character string of the brand domain itself and, for example, only the first half of a URL is displayed because of a small display area of a smartphone or the like, there may be a case where the subdomain is accessed from a user who is deceived to believe that the subdomain is a brand domain. According to this technique, based on a Passive DNS, an item in which a brand domain is included in the subdomain of the domain is detected from a history of the forward lookup of name resolution.

Japanese Laid-open Patent Publication No. 2012-118577, Japanese Laid-open Patent Publication No. 2012-118713, and International Publication Pamphlet No. WO 2020/021811 are disclosed as related art.

Wang, Yi-Min, et al. "Strider Typo-Patrol: Discovery and Analysis of Systematic Typo-Squatting." SRUTI 6.31-36 (2006): 2-2 and Du, Kun, et al. "TL; DR hazard: A comprehensive study of levelsquatting scams." International Conference on Security and Privacy in Communication Systems. Springer, Cham, 2019 are also disclosed as related art.

### SUMMARY

### TECHNICAL PROBLEM

However, there is a problem with the above-described related art in that it is difficult to detect such abuse of a domain that a substring of a brand domain is registered as a domain so that the entire domain is complemented with the subdomain.

For example, in the case where a substring of a brand domain is registered as a domain so that the entire domain is complemented with the subdomain, although an unnatural dot remains in the character string, a character string of an FQDN that is very similar to the original brand domain may be abused.

As an example, in a case where fujitsu.com is aimed, when tsu.com is registered and fuji is operated as a subdomain, fuji.tsu.com is obtained. In the description below, such registration of a substring of a brand domain is referred to as substring squatting, the registered domain is referred to as a substring squatting domain, and the abused subdomain is referred to as a substring squatting subdomain.

There are problems with the substring squatting domain abuse technique as follows.
(1) Since a domain far from an aimed brand domain in edit distance is registered, it is difficult to detect by using the related-art typosquatting detection technique.
(2) Since a brand domain is not abused as a subdomain without change, it is difficult to detect by using the level squatting detection technique.
(3) For abuse of a subdomain, operation may be performed such that no registration cost is incurred and response is made at desired timing.
(4) Regarding top level domains (TLDs), there are greater than or equal to 1200 TLDs for which delegation has been started in the year 2012 or after due to constraint relaxation of the Internet Corporation for Assigned Names and Numbers (ICANN), and a large amount of substring squatting is possible when not sticking to the same TLDs as the targets. For example, there is possibility of squatting of greater than or equal to 1500 with tsu.xxx (xxx is a TLD) when a country code top level domain (ccTLD) is included.

As described above, since a large amount of substring squatting for a brand domain is possible. Thus, without detection of the substring squatting domain abuse technique, it is difficult to appropriately assess the risk of abuse against a brand domain.

In one aspect, an object is to be provided a domain search program, a method of searching a domain, and an information processing apparatus that may detect abuse of a domain.

### SOLUTION TO PROBLEM

According to an aspect of the embodiments, there is provided a domain search program including instructions which, when executed by a computer, cause the computer to perform processing. In an example, the processing includes: generating a character string in which a character string of a domain of a first hierarchical level in a domain name space is concatenated with a character string of a domain of a second hierarchical level that is a lower hierarchical level relative to the first hierarchical level; and in a case where a domain of the generated character string is included in a domain list in which at least one particular domain is described, outputting information that serves as an indicator of unauthorized use of the particular domain.

### ADVANTAGEOUS EFFECT OF INVENTION

Abuse of a domain may be detected.

### BRIEF DESCRIPTION OF DRAWINGS

FIG. 1 is a block diagram illustrating an example of the functional configuration of an information processing apparatus according to an embodiment;
FIG. 2 is a flowchart illustrating an example of a common end character string extraction process;
FIG. 3 is an explanatory diagram explaining an example of common end character string data;
FIG. 4 is a flowchart illustrating an example of a registration domain inquiry process;
FIG. 5 is an explanatory diagram explaining an example of common end registration domain data;
FIG. 6 is a flowchart illustrating an example of a substring squatting detection process;
FIG. 7 is an explanatory diagram explaining an example of substring squatting subdomain data;
FIG. 8 is a flowchart illustrating an example of a risk assessment process;
FIG. 9 is an explanatory diagram explaining an example of brand domain damage status data;
FIG. 10 is an explanatory diagram explaining an example of TLD abuse status data; and
FIG. 11 is an explanatory diagram illustrating an example of the configuration of a computer.

### DESCRIPTION OF EMBODIMENTS

A domain search program, a method of searching a domain, and an information processing apparatus according to an embodiment will be described below with reference to the drawings. In the embodiment, elements having the same functions are denoted by the same reference signs, thereby redundant description thereof is omitted. The domain search program, the method of searching a domain, and the information processing apparatus to be described in the embodiment below are merely exemplary and do not limit the embodiment. Portions of the embodiment below may be appropriately combined as long as the portions of the embodiment do not contradict each other.

The information processing apparatus according to the embodiment generates a character string in which a character string of a domain of a first hierarchical level is concatenated with a character string of a domain of a second hierarchical level next to the first hierarchical level in the domain name space having a hierarchical structure formed by a host name, a domain name, and the like delimited by a period from a top level domain (TLD, for example, "us", "jp", "com", or the like) immediately below the root. In a case where a domain list in which at least one particular domain such as a brand domain is described includes a domain of the generated character string, the information processing apparatus according to the embodiment detects unauthorized use of the particular domain.

For example, the information processing apparatus according to the embodiment identifies a domain of the first hierarchical level, for example, a substring squatting domain based on an end character string common to brand domains accessed a large number of times. Next, the information processing apparatus according to the embodiment collects subdomains (domains of the second hierarchical level) of a domain with which many brand domains are likely to be abused in the subdomains from, for example, a passive domain name system (DNS) record and performs risk assessment of a repeatedly damaged brand domain.

A substring squatting domain registers an end character string of a brand domain as a domain and abuses the registered end character string. Thus, when an end character string common to various brand domains is registered, the registered end character string may be reused. For example, when a domain "e" is registered, subdomains such as googl.e, appl.e, adob.e, youtub.e may be abused. Conversely, efficient substring squatting detection may be performed by using such a character string.

A method of abusing a subdomain is special, and not all brand domains are necessarily targeted. It is more efficient to detect an abused brand domain from subdomains for which name resolution has already been observed than to detect from substrings of the brand domain.

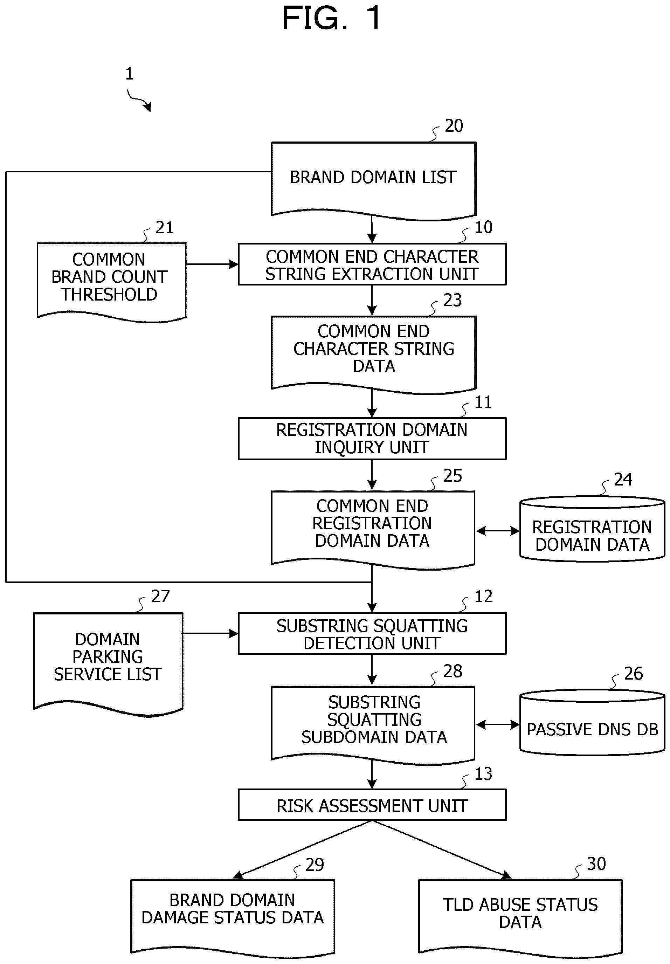

FIG. 1 is a block diagram illustrating an example of the functional configuration of the information processing apparatus according to the embodiment. An information processing apparatus 1 according to the embodiment is, for example, a computer, such as a personal computer (PC). As illustrated in FIG. 1, the information processing apparatus 1 includes a common end character string extraction unit 10, a registration domain inquiry unit 11, a substring squatting detection unit 12, and a risk assessment unit 13.

The common end character string extraction unit 10 is a processing unit which receives, as input, a brand domain list 20 and a common brand count threshold 21 and which outputs common end character string data 23 related to an end character string common to brand domains described in the brand domain list 20.

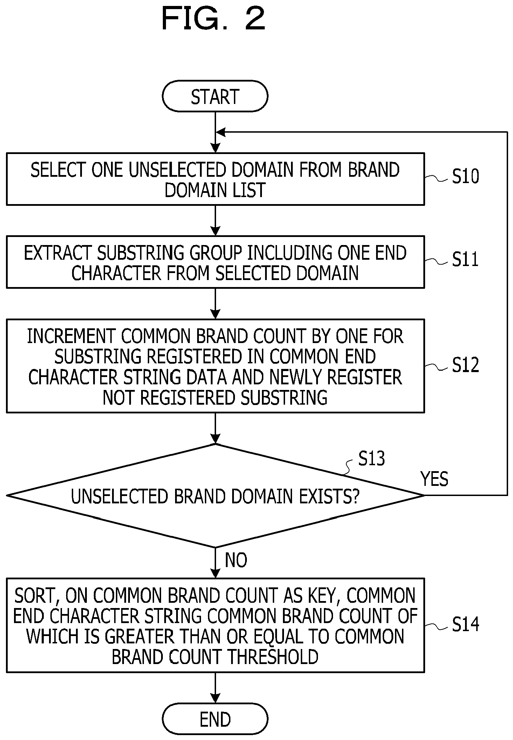

FIG. 2 is a flowchart illustrating an example of a common end character string extraction process. As illustrated in FIG. 2, when the common end character string extraction process is started, the common end character string extraction unit 10 selects one of unselected domains from among the brand domains described in the brand domain list 20 (S10).

The brand domain list 20 is a list in which at least one or more famous brand domains are described. The brand domain list 20 is a list of effective second level domains (SLDs) without duplication of the brand domains. In the brand domain list 20, at least one or more famous brand domains are described. For example, although many domains such as google.com and google.co.jp exist for Google, only google is described in the brand domain list 20.

After that, the common end character string extraction unit 10 extracts a group of substrings having an arbitrary number of characters including one end character from the selected domain (SLD) (S11). For example, in the case of google, the common end character string extraction unit 10 extracts e, le, gle, ogle, oogle and the like as the substring group.

Next, the common end character string extraction unit 10 increments a common brand count by one for a substring having been registered in the common end character string data 23 and newly registers a substring that has not been registered (S12). Next, the common end character string extraction unit 10 determines whether there is an unselected brand domain in the brand domain list 20 (S13). In a case where there is an unselected brand domain (S13: Yes), the common end character string extraction unit 10 returns the process to S10. Otherwise (S13: No), the common end character string extraction unit 10 causes the process to proceed to S14. In this way, the common end character string extraction unit 10 repeats the series of portions of the process in S10 to S12 until there is no unselected brand domain in the brand domain list 20.

Next, the common end character string extraction unit 10 sorts, on the common brand count as the key, common end character strings the common brand count of which is greater than or equal to the common brand count threshold 21 in the common end character string data 23 (S14) and ends the process.

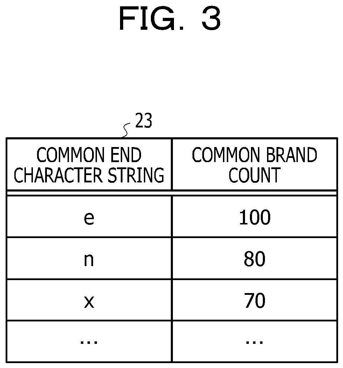

FIG. 3 is an explanatory diagram explaining an example of the common end character string data 23. As illustrated in FIG. 3, in the common end character string data 23, end character strings common to the brand domains in the brand domain list 20 such as "e", "n", and "x" are stored in a column of the "COMMON END CHARACTER STRING", and the common brand counts such as "100", "80", and "70" are stored in a column of the "COMMON BRAND COUNT".

Referring back to FIG. 1, the registration domain inquiry unit 11 is a processing unit which receives, as input, the common end character string data 23 and a registration domain data 24 and which outputs common end registration domain data 25 based on the input data. For example, the registration domain inquiry unit 11 checks whether the domain having a common end character string as its name has been registered in TDL, for example, whether the domain having a common end character string as its name exists in the domain name space and outputs the registered domain as the common end registration domain data 25.

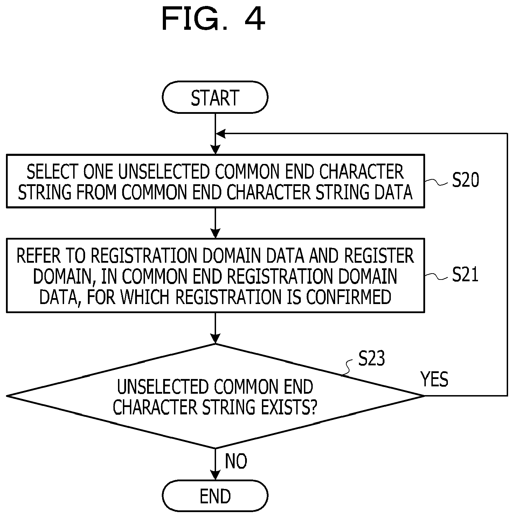

FIG. 4 is a flowchart illustrating an example of a registration domain inquiry process. As illustrated in FIG. 4, when the registration domain inquiry process starts, the registration domain inquiry unit 11 selects one of the unselected common end character strings from among the common end character string data 23 (S20). Next, the registration domain inquiry unit 11 refers to the registration domain data 24 and registers in the common end registration domain data 25 the domain for which the registration has been confirmed (S21). Next, the registration domain inquiry unit 11 determines whether an unselected common end character string exists in the common end character string data 23 (S23). In a case where an unselected common end character string exists (S23: Yes), the process is returned to S20. Otherwise (S23: No), the process ends.

The registration domain data 24 is data indicating a registered domain stored in a DNS server or the like. When the registration domain data 24 is referred to, the registration domain inquiry unit 11 performs matching with the SLD and extracts registration domains for all the TLDs. The registration domain inquiry unit 11 repeats the series of portions of the process (S20 to S23) until the unselected common end character string does not exists.

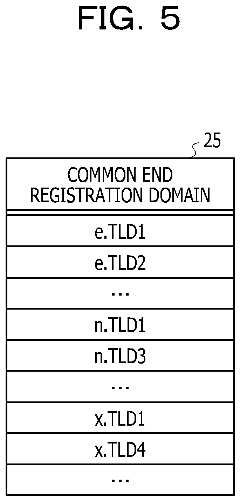

FIG. 5 is an explanatory diagram explaining an example of the common end registration domain data 25. As illustrated in FIG. 5, in the common end registration domain data 25, "e" domains the registration of which has been confirmed in some TLDs such as "e.TLD1" and "e.TLD2" (for example, "us" and "com" for TLD1 and TLD2, and the like) are stored in the column of "COMMON END REGISTRATION DOMAIN".

Referring back to FIG. 1, the substring squatting detection unit 12 is a processing unit which receives, as input, the common end registration domain data 25, the brand domain list 20, a domain parking service list 27, and a Passive DNS DB 26 and which outputs substring squatting subdomain data 28. For example, the substring squatting detection unit 12 generates a character string in which a character string of a domain included in the common end registration domain data 25 is concatenated with a character string of a subdomain for which name resolution for the domain has been observed. Next, in a case where the domain of the concatenated character string is included in the brand domain list 20, the substring squatting detection unit 12 detects unauthorized use of the corresponding brand domain and outputs the detection result as the substring squatting subdomain data 28.

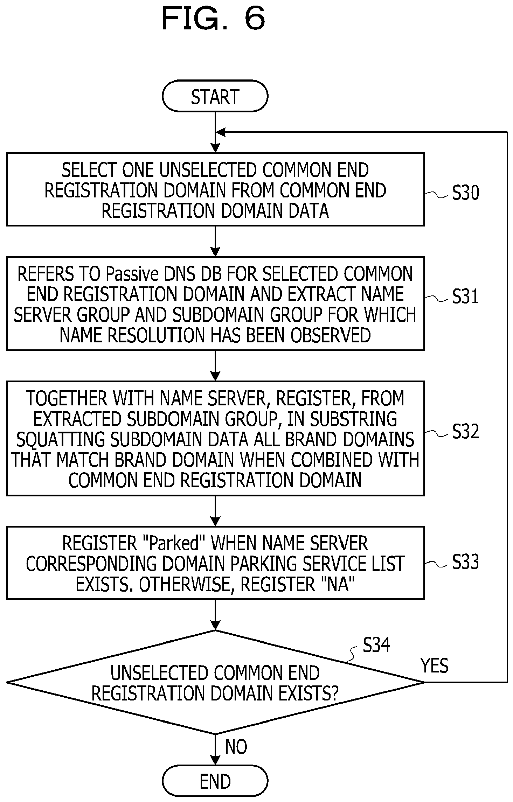

FIG. 6 is a flowchart illustrating an example of a substring squatting detection process. As illustrated in FIG. 6, when the substring squatting detection process starts, the substring squatting detection unit 12 selects one of unselected common end registration domains from among the common end registration domain data 25 (S30).

Next, the substring squatting detection unit 12 refers to the Passive DNS DB26 for the selected common end registration domain and extracts a name server group and a subdomain group for which name resolution has been observed (S31). For example, in a case where the DNSDB provided by Farsight Security (registered trademark), Inc. is used as the Passive DNS DB26, the substring squatting detection unit 12 may extract records such as A, AAAA, CNAME, NS, and the like for the domain when a wild card function of an application programming interface (API) is used. From the extracted records, the substring squatting detection unit 12 extracts the NS record and a record for which a query is issued in the form of a subdomain in the A record.

Next, the substring squatting detection unit 12 generates a character string from the extracted subdomain group by combining and concatenating with the common end registration domain and detects all the domains of the generated character string that match the brand domains included in the brand domain list 20. Next, the substring squatting detection unit 12 registers the detected brand domains in the substring squatting subdomain data 28 together with the name server (S32).

Next, the substring squatting detection unit 12 registers "Parked" in a case where the corresponding name server exists for the common end registration domain in the domain parking service list 27 and "NA" in a case where the corresponding name server does not exist for the common end registration domain (S33) in the domain parking service list 27. The domain parking service list 27 is data in which, for each domain, whether a parking service for the domain is used is described. "Parked" indicates that the parking service is used, and "NA" indicates that the parking service is not used.

Next, the substring squatting detection unit 12 determines whether an unselected common end registration domain exists in the common end registration domain data 25 (S34). When an unselected common end registration domain exists (S34: Yes), the process is returned to S30. Otherwise (S34: No), the process ends. The substring squatting detection unit 12 repeats the series of portions of the process (S30 to S33) until the unselected common end registration domain does not exists.

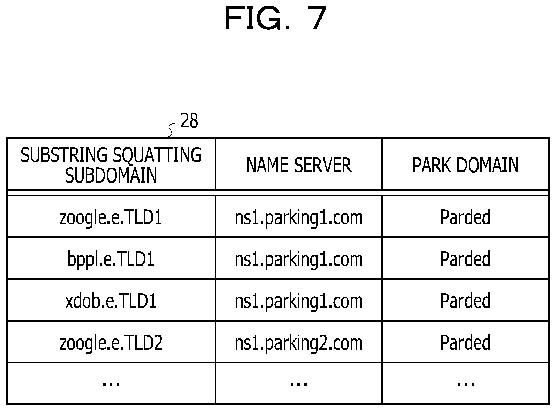

FIG. 7 is an explanatory diagram explaining an example of the substring squatting subdomain data 28. As illustrated in FIG. 7, in the substring squatting subdomain data 28, subdomains for which history of name resolution has been confirmed for e.TLD1 such as "zoogl.e.TLD1", "bppl.e.TLD1", and "xdob.e.TLD1" are stored in a column of "SUBSTRING SQUATTING SUBDOMAIN". Name servers such as "ns1.parking1.com" are stored in a column of "NAME SERVER", and "Parked" indicating that the name server is a parking service provider is stored in a column of "PARK DOMAIN". It is noted that this description utilizes, as examples of the hypothetical brand domain, "zoogle", "bpple", and "xdobe"; these examples may imply "Google" (registered mark), "Apple"(registered mark), or "Adobe"(registered mark), respectively.

Referring back to FIG. 1, the risk assessment unit 13 is a processing unit which receives, as input, the substring squatting subdomain data 28 and which outputs brand domain damage status data 29 and TLD abuse status data 30. For example, the risk assessment unit 13 assesses a risk related to unauthorized use of the brand domain based on the result of detection by the substring squatting detection unit 12, and outputs an assessment result as the brand domain damage status data 29 and the TLD abuse status data 30.

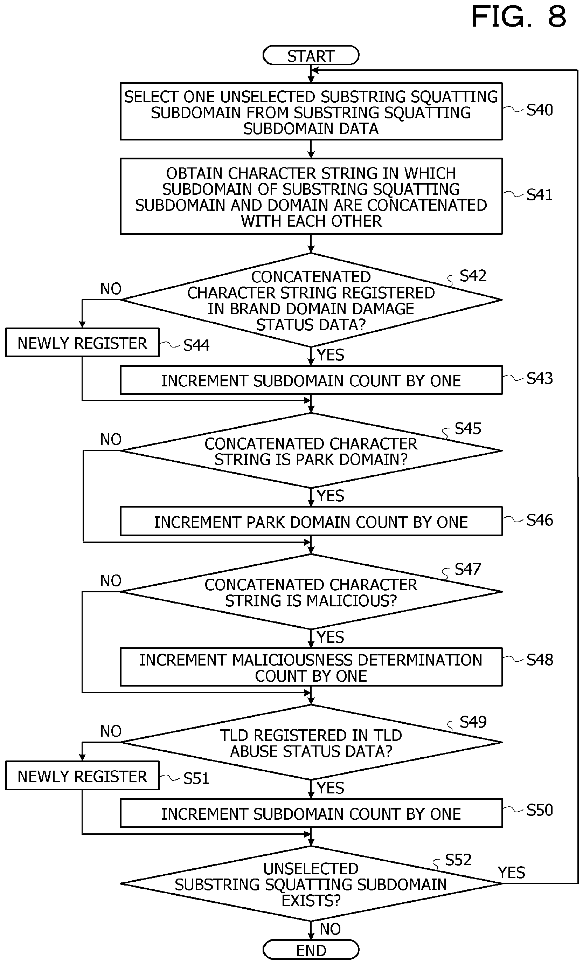

FIG. 8 is a flowchart illustrating an example of a risk assessment process. As illustrated in FIG. 8, when the risk assessment process starts, the risk assessment unit 13 selects one of unselected substring squatting domains from the substring squatting subdomain data 28 (S40).

Next, the risk assessment unit 13 obtains a character string in which the subdomain of the selected substring squatting subdomain is concatenated with the domain (S41). Next, the risk assessment unit 13 determines whether the concatenated character string is registered in the brand domain damage status data 29 (S42). Although the risk assessment regarding the domain of the concatenated character string is exemplified below, the risk assessment may be an assessment of the domain in the substring squatting subdomain before the concatenation.

In a case where the concatenated character string is registered in the brand domain damage status data 29 (S42: Yes), the risk assessment unit 13 increments a subdomain count in the brand domain damage status data 29 by one (S43) and causes the process to proceed to S45. In a case where the concatenated character string is not registered in the brand domain damage status data 29 (S42: No), the risk assessment unit 13 newly registers the brand domain of the concatenated character string in the brand domain damage status data 29 (S44) and causes the process to proceed to S45.

Next, the risk assessment unit 13 determines whether the domain of the concatenated character string is a park domain based on the column of the park domain in the substring squatting subdomain data 28 (S45).

In a case where the concatenated character string is a park domain (S45: Yes), the risk assessment unit 13 increments a park domain count in the brand domain damage status data 29 by one (S46) and causes the process to proceed to S47. When the concatenated character string is not a park domain (S45: No), the risk assessment unit 13 skips S46 and causes the process to proceed to S47.

Next, based on threat information about a cyber attack provided by a threat information registration site or the like, the risk assessment unit 13 performs maliciousness determination on the domain of the concatenated character string (S47). The threat information refers to cyber threat intelligence (CTI) indicating attack information in which the motivation, the purpose, the characteristics, the method, and the like of an attacker of a cyber attack are organized.

For example, in a case where the domain of the concatenated character string is included in the threat information, the risk assessment unit 13 determines that the concatenated character string is malicious (S47: Yes) and increments a maliciousness determination count by one (S48). In a case where the domain of the concatenated character string is not included in the threat information (S47: No), the risk assessment unit 13 skips S48 and causes the process to proceed to S49.

Next, the risk assessment unit 13 determines whether a TLD related to the domain of the concatenated character string is registered in the TLD abuse status data 30 (S49). In a case where the TLD is registered in the TLD abuse status data 30 (S49: Yes), the risk assessment unit 13 increments a subdomain count in the TLD abuse status data 30 by one (S50) and causes the process to proceed to S52. In a case where the TLD is not registered in the TLD abuse status data 30 (S49: No), the risk assessment unit 13 newly registers the TLD in the TLD abuse status data 30 (S51) and causes the process to proceed to S52.

Next, the risk assessment unit 13 determines whether an unselected substring squatting subdomain exists in the substring squatting subdomain data 28 (S52). When an unselected common end registration domain exists (S52: Yes), the process is returned to S40. When an unselected common end registration domain does not exist (S52: No), the process ends. The risk assessment unit 13 repeats the series of portions of the process (S40 to S51) until the unselected substring squatting subdomain does not exist.

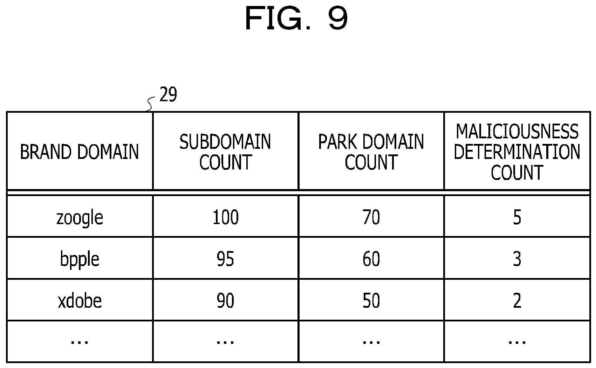

FIG. 9 is an explanatory diagram explaining an example of the brand domain damage status data 29. As illustrated in FIG. 9, in the brand domain damage status data 29, damaged brand names such as "zoogle", "bpple", and "xdobe" are stored in a column of "BRAND DOMAIN". The numbers, such as "100", "95", and "90", of the subdomains the brand domains of which have been abused are stored in the column of "SUBDOMAIN COUNT". The numbers, such as "70", "60", and "50", of the park domains out of the abused subdomains are stored in the column of the "PARK DOMAIN COUNT". The numbers, such as "5", "3", and "2", of the subdomains the maliciousness of which has been confirmed in the threat information are stored in the column of "MALICIOUSNESS DETERMINATION COUNT". It is noted that this description utilizes, as examples of the hypothetical brand domain, "zoogle", "bpple", and "xdobe"; these examples may imply "Google" (registered mark), "Apple"(registered mark), or "Adobe"(registered mark), respectively.

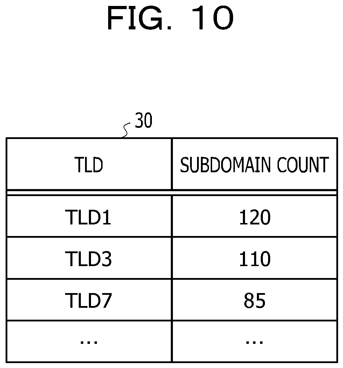

FIG. 10 is an explanatory diagram explaining an example of the TLD abuse status data 30. As illustrated in FIG. 10, in the TLD abuse status data 30, "TLD1", "TLD3", and "TLD7" that are abused TLDs are stored in a column of "TLD" (TLD1, TLD3, ... correspond to, for example, "com", "us", and the like). The numbers, such as "120", "110", and "85", of the subdomains related to the abused TLDs are stored in the column of "SUBDOMAIN COUNT".

As has been described, the information processing apparatus 1 generates a character string in which a character string of a domain of the first hierarchical level in the domain name space is concatenated with a character string of a domain of the second hierarchical level that is a lower hierarchical level relative to the first hierarchical level. In the case where a domain of the generated character string is included in the domain list (common brand count threshold 21) in which at least one particular domain is described, the information processing apparatus 1 outputs information that serves as an indicator of unauthorized use of the particular domain.

Accordingly, the information processing apparatus 1 may detect abuse of the domain of giving semblance of a particular domain such that a character string in which a character string of a domain of the first hierarchical level is concatenated with a character string of a domain of the second hierarchical level next to the first hierarchical level becomes the particular domain. For example, the information processing apparatus 1 may detect a substring squatting domain abuse technique that is performed such that a substring of a brand domain is registered as a domain so that the entirety of the domain is complemented by the subdomain.

The information processing apparatus 1 identifies a domain of the first hierarchical level based on whether a domain of one or a plurality of character strings including the end of a particular domain described in the domain list exists in the domain name space. Accordingly, the information processing apparatus 1 may narrow down domains of substrings including the end of the particular domain to domains of the first hierarchical level.

In the information processing apparatus 1 according to the present embodiment, the domain of the first hierarchical level is an SLD having been registered for a TLD. Accordingly, the information processing apparatus 1 may detect such unauthorized use of a domain that makes an SLD and a subdomain of the SLD concatenated with each other appear to be a particular domain. A domain of the first hierarchical level may be a hierarchical level lower than or equal to a third level domain.

The information processing apparatus 1 concatenates a character string of a domain in a subdomain group for which name resolution has been confirmed in the domain of the first hierarchical level with a character string of the domain of the first hierarchical level. As described above, the information processing apparatus 1 detects unauthorized use from the domain list by concatenating a character string of a domain of the first hierarchical level with a character string of a domain in the subdomain group for which name resolution has been confirmed. Thus, unauthorized use may be efficiently detected.

For example, the number of brand domains is large and not all the brand domains are damaged. Thus, to investigate the substring squatting for all the brand domains is not efficient since, for the investigation, a large number of queries in Passive DNS are desired. The information processing apparatus 1 is efficient since a damaged brand domain is searched from subdomains for which name resolution has been observed based on a domain that may be reused for many brand domains when abuse occurs. When unauthorized use is detected, a phishing scam or the like may be investigated so as to, for example, provide a black list or call attention for a brand domain with many damages.

Based on whether a domain of the first hierarchical level for which unauthorized use of a particular domain is detected is included in the threat information related to a cyber attack, the information processing apparatus 1 determines the degree of maliciousness for the particular domain. Accordingly, the information processing apparatus 1 may assess the degree of maliciousness for the particular domain in the domain of the first hierarchical level for which unauthorized use of the particular domain is detected.

The information processing apparatus 1 determines whether a domain in the first hierarchical level for which unauthorized use of a particular domain is detected is a park domain. Accordingly, the information processing apparatus 1 may identify whether a domain of the first hierarchical level for which unauthorized use of the particular domain is detected is used as a park domain.

Each element of each apparatus illustrated in the drawings is not necessarily physically configured as illustrated in the drawings. For example, specific forms of the separation and integration of each apparatus are not limited to those illustrated in the drawings. The entirety or part of the apparatus may be configured by functionally or physically separating into arbitrary units or integrating into an arbitrary unit in accordance with various loads, usage situations, and the like.

All or an arbitrary subset of the various processing functions relating to the common end character string extraction unit 10, the registration domain inquiry unit 11, the substring squatting detection unit 12, and the risk assessment unit 13 of the information processing apparatus 1 may be executed in a central processing unit (CPU, or a microcomputer such as a microprocessor unit (MPU) or a microcontroller unit (MCU)). Of course, all or an arbitrary subset of the various processing functions may be executed with a program analyzed and executed by a CPU (or a microcomputer such as an MPU or an MCU) or with hardware of wired logic. The various processing functions to be executed by the information processing apparatus 1 may be executed by cloud computing in which a plurality of computers collaborate with each other.

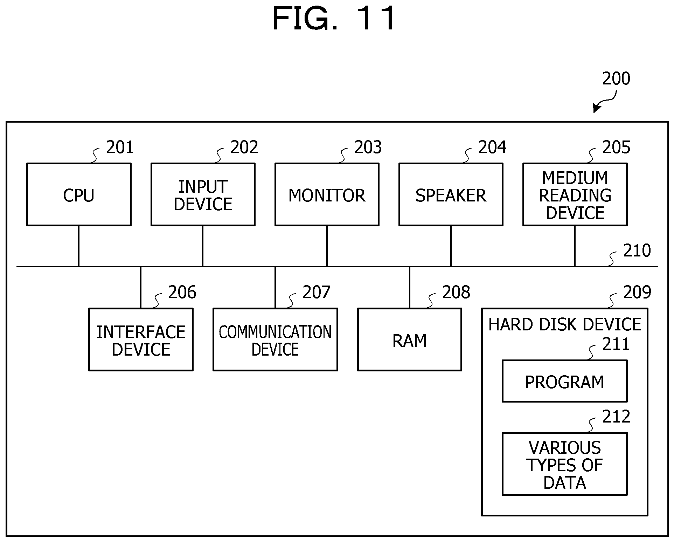

The various processes described according to the above-described embodiment may be realized by executing, with a computer, a program prepared in advance. Hereinafter, an example of the configuration of the computer (hardware) that executes the program having the functions similar to the functions of the above-described embodiment will be described. FIG. 11 is an explanatory diagram explaining an example of the configuration of the computer.

As illustrated in FIG. 11, a computer 200 includes a CPU 201 that executes various arithmetic processes, an input device 202 that accepts data input, a monitor 203, and a speaker 204. The computer 200 also includes a medium reading device 205 that reads the program and so forth from a storage medium, an interface device 206 for coupling to various devices, and a communication device 207 for coupling to and communicating with an external device in a wired or wireless manner. The computer 200 also includes a random-access memory (RAM) 208 and a hard disk device 209. The RAM 208 temporarily stores various types of information. The components (201 to 209) in the computer 200 are coupled to a bus 210.

The hard disk device 209 stores a program 211 for executing the various processes of the functional elements (for example, the common end character string extraction unit 10, the registration domain inquiry unit 11, the substring squatting detection unit 12, and the risk assessment unit 13) described according to the above-described embodiment. The hard disk device 209 also stores various types of data 212 to be referred to by the program 211. The input device 202 accepts, for example, input of operation information from an operator. The monitor 203 displays, for example, various screens to be operated by the operator. For example, a printer or the like is coupled to the interface device 206. The communication device 207 is coupled to a communication network such as a local area network (LAN) and exchanges various types of information with the external device via the communication network.

The CPU 201 reads the program 211 stored in the hard disk device 209, loads the read program 211 on the RAM 208, and executes the processes relating to the program 211, thereby realizing the above-described functional elements (for example, the common end character string extraction unit 10, the registration domain inquiry unit 11, the substring squatting detection unit 12, and the risk assessment unit 13). The program 211 is not necessarily stored in the hard disk device 209. For example, the program 211 stored in a storage medium readable by the computer 200 may be read and executed. The storage medium readable by the computer 200 corresponds to, for example, a portable storage medium such as a compact disc read-only memory (CD-ROM), a Digital Versatile Disc (DVD), or a Universal Serial Bus (USB) memory, a semiconductor memory such as a flash memory, a hard disk drive, or the like. The program 211 may be stored in a device coupled to a public network, the Internet, a LAN, or the like, and the computer 200 may read and execute the program 211 from the device.

In relation to the embodiment above, the following appendices are further disclosed.

## Claims

1. A domain search program comprising instructions which, when executed by a computer, cause the computer to perform processing, the processing comprising:
generating a character string in which a character string of a domain of a first hierarchical level in a domain name space is concatenated with a character string of a domain of a second hierarchical level that is a lower hierarchical level relative to the first hierarchical level; and
in a case where a domain of the generated character string is included in a domain list in which at least one particular domain is described, outputting information that serves as an indicator of unauthorized use of the particular domain.

2. The domain search program according to claim 1, the processing further comprising:
identifying the domain of the first hierarchical level based on whether a domain of one or a plurality of character strings that include an end of the particular domain described in the domain list exists in the domain name space.

3. The domain search program according to claim 2, wherein
the domain of the first hierarchical level is a second level domain (SLD) that has been registered for a top level domain (TLD).

4. The domain search program according to any one of claims 1 to 3, wherein,
in the generating, a character string of a domain in a domain group of the second hierarchical level for which name resolution has been confirmed in the domain of the first hierarchical level is concatenated with the character string of the domain of the first hierarchical level.

5. The domain search program according to any one of claims 1 to 4, the processing further comprising:
based on whether the domain of the first hierarchical level for which the unauthorized use of the particular domain is detected is included in threat information related to a cyber attack, determining a degree of maliciousness for the particular domain.

6. The domain search program according to any one of claims 1 to 5, the processing further comprising:
determining whether the domain of the first hierarchical level for which the unauthorized use of the particular domain is detected is a park domain.

7. A domain search method implemented by a computer, the domain search method comprising:
generating a character string in which a character string of a domain of a first hierarchical level in a domain name space is concatenated with a character string of a domain of a second hierarchical level that is a lower hierarchical level relative to the first hierarchical level; and
in a case where a domain of the generated character string is included in a domain list in which at least one particular domain is described, outputting information that serves as an indicator of unauthorized use of the particular domain.

8. An information processing apparatus comprising:
a memory; and
a processor coupled to the memory, the processor being configured to perform processing, the processing including:
generating a character string in which a character string of a domain of a first hierarchical level in a domain name space is concatenated with a character string of a domain of a second hierarchical level that is a lower hierarchical level relative to the first hierarchical level; and
in a case where a domain of the generated character string is included in a domain list in which at least one particular domain is described, outputting information that serves as an indicator of unauthorized use of the particular domain.

## Amended claims

### Amended claims in accordance with Rule 137(2) EPC.

1. A domain search program (211) comprising instructions which, when executed by a computer (200), cause the computer (200) to perform processing, the processing comprising:
generating a character string in which a character string of a domain of a first hierarchical level in a domain name space is concatenated with a character string of a domain of a second hierarchical level for which name resolution has been observed in the domain of the first hierarchical level, wherein the second hierarchical level is a lower hierarchical level relative to the first hierarchical level; and
in a case where a domain of the generated character string is included in a domain list in which at least one particular domain is described, outputting information that serves as an indicator of unauthorized use of the particular domain.

2. The domain search program (211) according to claim 1, the processing further comprising:
identifying the domain of the first hierarchical level based on whether a domain of one or a plurality of character strings that include an end of the particular domain described in the domain list exists in the domain name space.

3. The domain search program (211) according to claim 2, wherein
the domain of the first hierarchical level is a second level domain (SLD) that has been registered for a top level domain (TLD).

4. The domain search program (211) according to any one of claims 1 to 3, wherein,
in the generating, a character string of a domain in a domain group of the second hierarchical level for which name resolution has been confirmed in the domain of the first hierarchical level is concatenated with the character string of the domain of the first hierarchical level.

5. The domain search program (211) according to any one of claims 1 to 4, the processing further comprising:
based on whether the domain of the first hierarchical level for which the unauthorized use of the particular domain is detected is included in threat information related to a cyber attack, determining a degree of maliciousness for the particular domain.

6. The domain search program (211) according to any one of claims 1 to 5, the processing further comprising:
determining whether the domain of the first hierarchical level for which the unauthorized use of the particular domain is detected is a park domain.

7. A domain search method implemented by a computer, the domain search method comprising:
generating a character string in which a character string of a domain of a first hierarchical level in a domain name space is concatenated with a character string of a domain of a second hierarchical level for which name resolution has been observed in the domain of the first hierarchical level, wherein the second hierarchical level is a lower hierarchical level relative to the first hierarchical level; and
in a case where a domain of the generated character string is included in a domain list in which at least one particular domain is described, outputting information that serves as an indicator of unauthorized use of the particular domain.

8. An information processing apparatus (1) comprising:
a memory; and
a processor coupled to the memory, the processor being configured to perform processing, the processing including:
generating a character string in which a character string of a domain of a first hierarchical level in a domain name space is concatenated with a character string of a domain of a second hierarchical level for which name resolution has been observed in the domain of the first hierarchical level, wherein the second hierarchical level is a lower hierarchical level relative to the first hierarchical level; and
in a case where a domain of the generated character string is included in a domain list in which at least one particular domain is described, outputting information that serves as an indicator of unauthorized use of the particular domain.
